# EUROPEAN PATENT APPLICATION

(11) **EP 1 734 015 A2**
(43) Date of publication of application: **20.12.2006**
(21) Application number: 06115551.1
(22) Date of filing: 15.06.2006
(51) Int. Cl.: C03B 11/08, B29D 11/00, G02B 3/00

(54) **Optical element and process and apparatus for manufacturing the same**

(30) Priority: 16.06.2005 JP 2005177024
(71) Applicant: SONY CORPORATION, Tokyo (JP)
(72) Inventor: Yamamichi, Nobuhiro, Shinagawa-ku Tokyo (JP)
(74) Representative: Thévenet, Jean-Bruno

(57) **Abstract**

There is provided an optical unit manufacturing method in which an optical element (45) is obtained by giving compression to an optical material using a mold (15, 16) after thermal softening of the optical material, and uniting of a frame unit (46) with the optical element (45) is required. The optical unit manufacturing method includes a step of forming the frame unit (46) as an integral part of the optical element (45) with reference to a position of the mold (15, 16) while holding the optical element (45) without opening the mold (15, 16) after forming of the optical element (45).

## Description

### BACKGROUND OF THE INVENTION

### 1. Field of the Invention:

The present invention relates to an optical unit manufacturing method, an optical unit, and a mold thereof. More particularly, the present invention relates to an optical unit manufacturing method in which an optical element united with a frame unit is obtained by performing compression (press forming) to an optical material with a mold after thermal softening of the optical material, an optical unit resulting from use of the above method, and a forming apparatus used to form the above optical unit.

### 2. Description of Related Arts:

A small-sized high-performance optical lens is used as an optical system of an electronic image capturing means of an electronic still camera, an electronic video camera and a camera-mounted mobile phone etc. The smaller a size of this type of optical lens is, the more demands for precision in lens face shape, tilt in an optical axis direction, and de-center etc. are exacting. Further, there are also many types of optical lenses being difficult to locate an optical element axis, like an aspherical lens, leading to a difficulty in also meeting a demand for precise alignment of an optical element with a support frame or a lens barrel for securing the optical element.

One related art method that is most frequently taken to secure the lens is to bond or caulk an axially symmetrical lens formed by glass molding, with the lens fitted into the lens barrel, after an outer circumference of the lens is formed by grinding with a centering machine. However, use of this method causes an error occurring at the time when making alignment involved in installation of the lens on the centering machine to overlap with an error occurring at the time when securing the lens to the lens barrel or a mounting frame.

In order to solve the above problem, a forming method called no-centering-required forming that is adaptable to form a lens contour at the same time as the forming of the lens has been taken. For instance, Japanese Patent Application Laid-open No.2000-7355 discloses a glass optical element forming method. According to the method, a glass optical element is united with a forming frame unit in a state where the forming frame unit is arranged at the outside of a glass optical element material in the mold. Then, the forming frame unit is separated from the glass optical element after completion of forming.

However, it is quite difficult to precisely form the lens contour at the same time as forming of the lens face, and exact demands for precision in shape of a material to be cast also arise, so that this method requires highly skilled technique. Further, the outer circumference-side frame unit used at the time of no-centering-required forming is removed after completion of a forming process, so that the error caused in a later process of securing the lens to the mounting frame or the lens barrel will still exist.

Thereupon, one method is conceivable, which is to secure the lens by bringing an optical element material into close contact with the inside of the lens barrel or the mounting frame, after compression of the optical element is given in a state where the lens barrel or the mounting frame is set within the mold. However, an available material for the lens barrel or the frame unit normally includes a synthetic resin, and is thus unable to withstand a temperature adapted to forming of the optical element. When cryogenic softening glass is used as the optical material, a molding temperature of a preformed glass subjected to compression also increases up to 400°C or above, so that this method will impose restrictions on materials for the lens barrel or the frame unit. Such a method is disclosed in Japanese Patent Application Laid-open No.9-202627, for example.

### SUMMARY OF THE INVENTION

The present invention provides a method of obtaining an optical unit structured so that a frame unit is integrally united with an optical element, and also, an optical unit obtained using the above method.

The present invention also provides a method of manufacturing an optical unit structured so that a frame unit formed of plastic is united with an outer circumference of an optical element formed of glass, and also, an optical unit manufactured using the above method.

The present invention further provides an optical unit manufacturing method which is capable of effectively absorb variations in quantity of supplied optical element material, and also, an optical unit manufactured using the above method.

The present invention still further provides an optical unit structured so that a frame unit is united with an optical element in a state where an optical axis of the optical element is correctly aligned.

The present invention further provides an optical unit structured so that a frame unit formed of plastic is united with an outer circumference of an optical element formed of glass in a state where an axial center of the frame unit is in alignment.

The present invention also provides a forming apparatus used to precisely form an optical unit structured so that a frame unit is integrally united with an optical element.

The present invention further provides a forming apparatus which is capable of absorbing variations in quantity of an optical material contained in an optical element.

An embodiment of the present invention provides an optical unit manufacturing method in which an optical element is obtained by performing compression to an optical material with a mold after thermal softening of the optical material, and uniting of a frame unit with the optical element is also required. The optical unit manufacturing method includes a step of forming the frame unit as an integral part of the optical element with reference to a position of the mold, while holding the optical element without opening the mold after forming of the optical element.

In the above method, the optical element may be a glass lens made of glass. Alternatively, the optical element may be also a plastic lens made of a synthetic resin. Further, a material of the frame unit may be plastic, permitting the frame unit to be formed as the integral part of the optical element by injection molding. Further, in a state where press of the optical material with the mold has been completed, a side edge of the optical element within the mold may be in the form of a free face. Further, it is also allowable to form the frame unit after the optical material is formed and then cooled down to a prescribed temperature or below.

An embodiment of the present invention optical unit provides an optical unit having an optical element obtained by compression, and a frame unit formed as an integral part of the optical element with reference to a position of a mold for compression, and united with the optical element. In the above optical unit, the optical element may be formed of glass, and the frame unit may be formed of plastic. Alternatively, both of the optical element and the frame unit may be formed of plastic. Further, an outer circumference-side edge of each of the opposite faces of the optical element may be given in the form of a flat portion extending approximately at a right angle to an optical axis.

An embodiment of the present invention provides a forming apparatus which includes a pair of face-to-face mold parts for giving compression to an optical material in a molten state into an optical element, and injection molding means connected sideways to a contact portion of one mold part with the other in a state where the mold parts are closed, and adapted to injection of a molten material of the frame unit formed as an integral part of the optical element. In the above forming apparatus, the mold parts may be closed with a space left in a position corresponding to the side edge of the optical element. Further, the outer circumference-side edge of each of the opposite faces of the optical element may be given in the form of the flat portion extending approximately at the right angle to the optical axis, in which case, the closed mold parts may be brought into pressure contact with the flat portions to cut off the resin for forming the frame unit.

The optical unit manufacturing method according to the embodiment of the present invention is a frame-mounted optical unit manufacturing method. According to the method, in glass molding in which the optical element is obtained by giving compression to the optical material with the mold after thermal softening of the optical material, the optical element frame is formed with reference to the position of the mold, while holding the optical element as it is in the mold with no mold opening required after forming of the optical element. In the above method, it is preferable to form the optical element by injection molding. Further, the material of the optical element frame preferably includes the plastic.

According to the above embodiment of the present invention, the need for manufacturing the optical element of a larger size for centering may be eliminated, resulting in a reduction in degree of formability. Further, the need for performing exact management of a material weight may be also eliminated, unlike the no-centering-required forming. Furthermore, because of no need for a separate process to unite the optical element with the frame unit, extremely high precision in alignment of the optical element with the frame unit may be provided. Furthermore, no increase in temperature of the frame unit material up to the molding temperature of the optical element is caused, unlike the related art technology, so that a great choice of frame materials may be also provided. Furthermore, there is an advantage of requiring no use of any expensive material.

### BRIEF DESCRIPTION OF THE DRAWINGS

The features and advantages of the present invention will become more apparent in the following description of presently preferred embodiments of the invention taken in conjunction with the accompanying drawings, in which:

FIG. 1 is an exploded perspective view showing a forming apparatus for manufacturing an optical unit;

FIG. 2 is a longitudinal cross-sectional view showing the forming apparatus in its assembled state;

FIG. 3 is a longitudinal cross-sectional view showing a state of the forming apparatus after a preformed glass is cast;

FIG. 4 is a fragmentary enlarged sectional view showing the forming apparatus being in a process of giving compression with top and bottom parts closed;

FIG. 5 is a fragmentary enlarged sectional view showing a formed optical lens, together with a frame unit united with the optical lens;

FIG. 6 is a perspective view showing one instance of the formed optical lens; and

FIG. 7 is a longitudinal cross-sectional view showing a lens barrel apparatus involving use of the optical unit.

### DESCRIPTION OF THE EMBODIMENTS

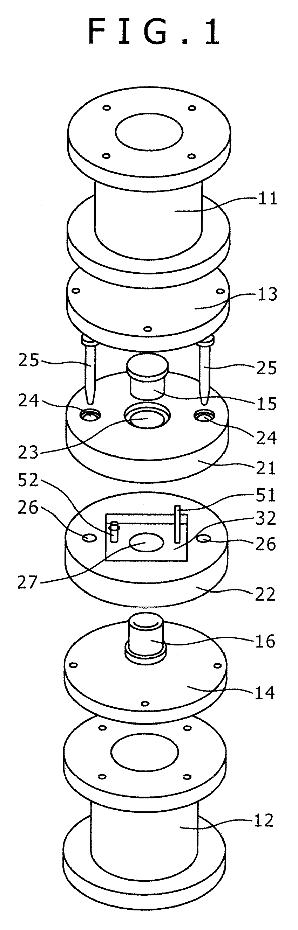

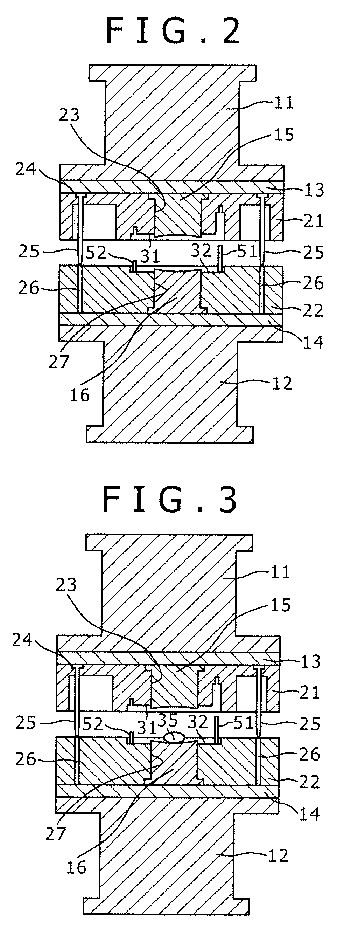

FIGS. 1 and 2 illustrate a forming apparatus used to manufacture an optical unit according to one embodiment of the present invention, and the illustrated forming apparatus has an upper shaft 11 and a lower shaft 12. A lower surface of the upper shaft 11 is fitted with a die plate 13, and an upper surface of the lower shaft 12 is fitted with a die plate 14. Then, these die plates 13 and 14 are adaptable to hold a top part 15 and a bottom part 16 respectively.

The top part 15 and the bottom part 16 both contained in a mold are configured to be held with upper and lower drum parts 21 and 22. The upper drum part 21 has a circular center hole 23 in the center thereof, permitting the top part 15 to be secured after being fitted into the center hole 23. The upper drum part 21 also has a pair of insertion holes 24 located in a symmetrical configuration around the center hole 23. A pair of locating pins 25 planted on a lower surface of the upper die plate 13 may be respectively inserted into the insertion holes 24.

On the other hand, the lower drum part 22 has a locating hole 26 that receives a tip portion of each locating pin 25 for regulation of a relative position between the top part 15 and the bottom part 16. Further, the lower drum part 22 also has a center hole 27 in the center, permitting the bottom part 16 to be secured after being fitted into the center hole 27. A lower surface of the upper drum part 22 that holds the top part 15 and an upper surface of the lower drum part 22 that holds the bottom part 16 have cavities 31 and 32 in the form of recesses as shown in FIG.2. These cavities 31 and 32 are adaptable to form a frame unit by injection molding.

As described above, the top part 15 for forming an optical element may be exactly fitted into the center hole 23 of the upper drum part 21. Further, the bottom part 16 also for forming the optical element exactly fits into the center hole 27 of the lower drum part 22. The drum parts 21 and 22 are supposed to be exactly aligned with each other by the locating pins 25 and the locating holes 26 at the time when compression is given with the top and the bottom parts 15 and 16 closed.

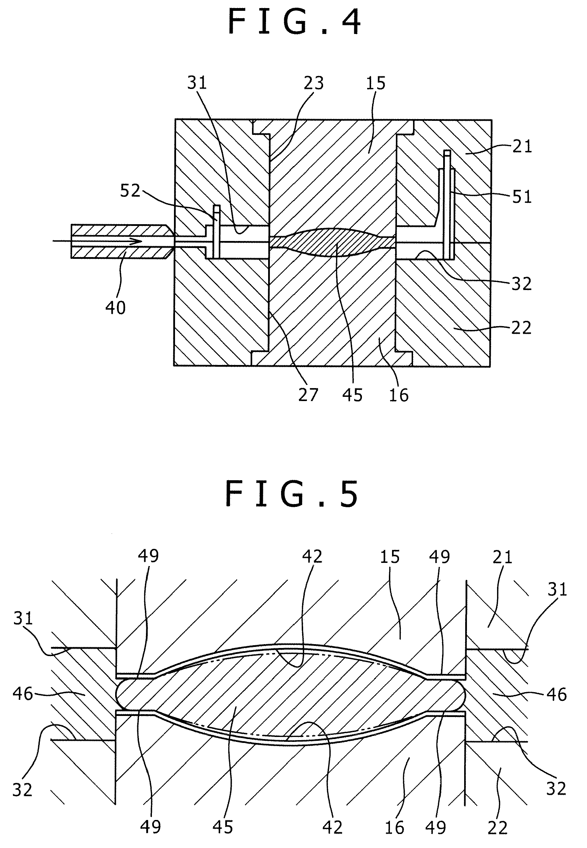

One forming operation will now be described. As shown in FIG. 3, with a preformed glass 35 set on the bottom part 16 being open, the top and the bottom parts 15 and 16 are given heating up to a molding temperature, causing a temperature of the preformed glass 35 to be raised up to 400 to 1000°C. After the molding temperature is reached, closing of the top and the bottom parts 15 and 16 follows. Specifically, in a case where the lower shaft 12 is fixed in position, the upper shaft 11 needs to be moved downwards for giving compression to the preformed glass 35 with the top and the bottom parts 15 and 16, while exactly making alignment of the upper and the lower drum parts 21 and 22 with each other by the locating pins 25 and the locating holes 26. An axially closing stroke end at this time is given by a position where the lower surface of the drum part 21 makes contact with the upper surface of the lower drum part 22. As long as press is completed by fully abutting the drum part 21 on the drum part 22, a cooling process is started in a state where the drum part 21 is in contact with the drum part 22. It is to be noted that in the cooling process, a forming surface made up of the lower surface of the top part 15 and a forming surface made up of the upper surface of the bottom part 16 are adapted to formation of a functional face of an optical lens 45, as shown in FIG. 4.

In this forming operation, as shown in FIG. 4 in particular, in the state that the top and the bottom parts 15 and 16 are in a completely closed position, the depressed preformed glass 35 adaptable to form the optical lens 45 forms the optical lens 45, and besides, its outer circumference is given in the form of a free curved surface to face the cavity 31. According to the above configuration, adjustment of variations in quantity of the material of the preformed glass 35 may be made at will with the outer circumference-side end face taking the form of the free curved surface, permitting weight management of the preformed glass 35 to be facilitated, and also preventing variations in weight of the preformed glass 35, even if they occur, from affecting the functional face of the resultant optical lens 45.

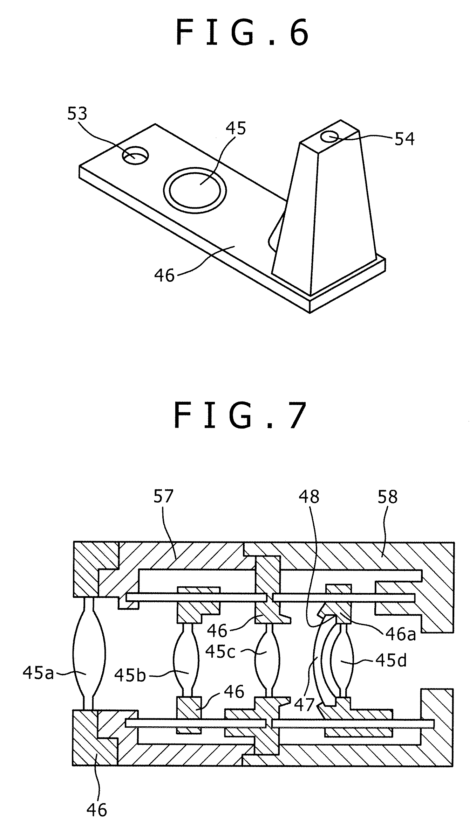

When a temperature adaptable to form a frame of the plastic material, for example, a temperature of 200°C or lower, is reached as the cooling process is advanced, the temperature of the top and the bottom parts 15 and 16 of the forming apparatus is held at a certain degree. While this temperature to be held varies depending on a type of resin materials, it is necessary to hold the top and the bottom parts at a certain temperature within the range of 130 to 160°C, for instance. Then, with the top and the bottom parts held at the certain temperature, an injection molding nozzle 40 is connected to a connection hole provided in a contact portion of the drum part 21 with the drum part 22 to extrude a molten plastic material through the connection hole, as shown in FIG. 4. As a result, the molten plastic flows into the cavities 31 and 32 in the form of recesses located in the contact portion of the drum part 21 with the drum part 22. A flow of the molten plastic reaches the side face of the optical lens 45, permitting a frame unit 46 to be formed as the integral part of the side face of the optical lens 45 formed of glass. In other words, an optical lens device structured so that the frame unit 46 is integrally united with the optical lens 45 so as to enclose the optical lens 45 may be obtained, as shown in FIG. 6.

It is to be noted that a pair of pins 51 and 52 are planted on the bottom of the cavity 32 in the lower drum part 22 so as to cross the cavities 31 and 32 formed by the upper and the lower drum parts 21 and 22, as shown in FIGS. 3 and 4. Thus, even if injection of a molten resin into the cavities 31 and 32 is given, no flow of the resin into cavity portions corresponding to the pins 51 and 52 is caused. Accordingly, as a result of mold opening following the above injection, the frame unit 46 formed as the integral part of the outer circumference of the optical lens 45 may be so obtained as to have a pair of insertion holes 53 and 54, as shown in FIG. 6. Guide rods are inserted into the insertion holes 53 and 54, permitting an optical unit having the frame unit 46 formed around the optical lens 45 to be guided movably.

After completion of the injection of the fully molten resin into the cavities 31 and 32, the process of cooling the top and the bottom parts 15 and 16 is restarted. Then, with the top and the bottom parts cooled down to a temperature adaptable to take out the optical unit, the upper shaft 11 is moved upwards to separate the top part 15 from the bottom part 16 for mold opening, leading to take-out of the optical unit given in the form of a molded product as shown in FIG. 6. FIG. 6 illustrates the optical unit having the optical lens 45 formed of glass integrally united with the frame unit 46 formed of plastic.

In the forming apparatus, the forming surfaces made up of the lower surface of the top part 15 and the upper surface of the bottom part 16 are covered with precious metal- or carbon-made protection layers 42 of several ten nm in thickness, as shown in FIG. 5. Use of the protection layers 42 as described above enables forming of the highly precious optical lens 45. Further, the above projection layers 42 are also adaptable to prevent the forming surfaces of the top and the bottom parts 15 and 16 from being worn off.

Besides, in the forming apparatus described above, particularly when forming the optical lens 45 with the top and the bottom parts 15 and 16 closed to each other, a glass portion is speedily subjected to shrinkage. Thus, the shrinkage firstly occurs in a neighborhood of an optical axis of the optical lens 45, or a center side of the optical lens. On the other hand, the shrinkage makes slow progress at the outer circumference side, and besides, the outer circumference of the optical lens 45 is given in the form of a flat portion 49, in which case, the flat portion 49 is in contact with the top and the bottom parts 15 and 16, resulting in no spacing between the optical lens 45 and the top and the bottom parts 15 and 16. Thus, even if the injection of the molten resin into the cavities 31 and 32 is given, there is no possibility that the injected molten resin will be adhered to the outer surface making up the functional face of the optical lens 45.

FIG. 7 illustrates a lens barrel apparatus involving use of the optical unit formed as described above, in which four pieces of optical units are incorporated in a cylindrical unit composed of a pair of front and rear lens barrels 57 and 58. In the above lens barrel apparatus, an optical lens 45a of the leftmost optical unit constitutes an objective lens, and an optical lens 45b of the optical unit at the right side of the objective lens constitutes a zoom lens. An intermediate fixed lens 45c having the frame unit 46 fixed to a contact portion of the lens barrel 57 with the lens barrel 58 is arranged at the right side of the zoom lens. Then, an optical lens 45d formed of a focus lens movable through a frame unit 46a is arranged at the rightmost side specified as the rear side of the intermediate fixed lens. It is to be noted that a different optical lens 47 is combined with the focus lens 45. The frame unit 46a holding the optical lens 45 formed of the focus lens is required to have, at its front face-side portion, a step portion 48 of a prescribed diameter, causing the different optical lens 47 to be exactly secured by thermal welding of a lens edge to the step portion 48 after the optical lens 47 is fitted into the step portion 48.

According to the above forming of the present embodiment, the need for preliminarily forming the optical lens 45 of an excessive size for centering may be eliminated, resulting in less difficulty in formability. Further, the need for performing strict management of the optical material weight may be also eliminated, unlike the no-centering-required forming. Furthermore, because of no need for a separate process to unite the optical lens 45 with the frame unit 46, higher precision in alignment of the optical lens 45 with the frame unit 46 may be provided. Furthermore, no increase in temperature of the frame unit 46 up to the molding temperature of the optical lens 45 is caused, unlike the related art technology, so that a great choice of materials for the frame unit 46 may be also provided. Furthermore, there is also an advantage of requiring no use of any expensive material such as a heat-resistant resin.

As shown in FIG. 5, the optical unit according to the present embodiment is structured so that as against the center in the form of the curved surface contained in the functional face of the optical lens 45, the opposite face edges of the lens have the flat portions 49 extending approximately at the right angle to the optical axis and parallel to each other, permitting the frame unit 46 to be formed by injection of the resin in the state where the optical lens 45 is surely held with the top and the bottom parts 15 and 16 of the forming apparatus, and also more surely preventing the resin from being adhered to the functional face of the optical lens 45.

While the present invention has been described with reference to the illustrated embodiments, it is to be noted that the present invention is not limited to the above embodiments, and various changes may be made without departing from the scope of the technical concept of the present invention contained in the present application. For instance, various changes in shape of the frame unit in the above embodiment may be made. Further, the resin contained in the frame unit is available in various types of materials depending on the purpose for forming. Furthermore, it is not always necessary to use the glass as the optical material, and use of the plastic in the molten state may be also made, if necessary.

The present invention is widely applicable as an optical system of an image capturing apparatus in various types of cameras such as electronic still cameras, video cameras and mobile phone cameras.

Use of the optical unit manufacturing method as described above permits the frame unit to be formed as the integral part of the optical element with reference to the position of the mold for the optical element, with the optical element held as it is after being formed. Accordingly, higher precision in uniting of the optical element with the frame unit may be provided.

Use of the forming apparatus as described above permits the optical unit structured so that the frame unit is integrally united with the optical element to be formed by injecting the molten material by the injection molding means, after the optical element is firstly formed with the mold. Particularly, use of the forming apparatus taking a configuration in which the mold parts are closed with the space left in the position corresponding to the side edge of the optical element permits the variations in optical material quantity to be absorbed with the side edge space at will.

It should be understood by those skilled in the art that various modifications, combinations, sub-combinations and alterations may occur depending on design requirements and other factors insofar as they are within the scope of the appended claims or the equivalents thereof.

## Claims

1. An optical unit manufacturing method in which an optical element (45) is obtained by giving compression to an optical material using a mold (15, 16) after thermal softening of the optical material, and uniting of a frame unit (46) with the optical element (45) is required, comprising the step of:
forming the frame unit (46) as an integral part of the optical element (45) with reference to a position of the mold (15, 16) while holding the optical element (45) without opening the mold (15, 16) after forming of the optical element (45).

2. The optical unit manufacturing method according to claim 1, wherein the optical element (45) is a glass lens whose material is glass.

3. The optical unit manufacturing method according to claim 1, wherein the optical element (45) is a plastic lens whose material is plastic.

4. The optical unit manufacturing method according to claim 1, wherein a material of the frame unit (46) is plastic, permitting the frame unit (46) to be formed as the integral part of the optical element (45) by injection molding.

5. The optical unit manufacturing method according to claim 1, wherein in a state where press using the mold (15, 16) for the optical material has been completed, an outer circumference-side edge of the optical element (45) within the mold (15, 16) is formed to be a free face.

6. The optical unit manufacturing method according to claim 1, wherein the frame unit is formed (46) after the optical material is formed and then cooled down to a prescribed temperature or below.

7. An optical unit, comprising:
an optical element (45) obtained by compression, and
a frame unit (46) formed as an integral part of the optical element (45) with reference to a position of a mold for compression, and united with the optical element (45).

8. The optical unit according to claim 7, wherein:
the optical element (45) is formed of glass, and
the frame unit (46) is formed of plastic.

9. The optical unit according to claim 7, wherein:
both of the optical element (45) and the frame unit (46) are formed of plastic.

10. The optical unit according to claim 7, wherein:
an outer circumference-side edge of each of the opposite faces of the optical element (45) is formed to be a flat portion extending approximately at a right angle to an optical axis.

11. A forming apparatus, comprising:
a pair of face-to-face mold parts (15, 16) for giving compression to an optical material in a molten state into an optical element (45), and
injection molding means connected sideways to a contact portion of one mold part with the other in a state where the mold parts (15, 16) are closed, and adapted to injection of a molten material of a frame unit (46) formed as an integral part of the optical element (45).

12. The forming apparatus according to claim 11, wherein:
the mold parts (15, 16) are closed with a space left in a position corresponding to a side edge of the optical element (45).

13. The forming apparatus according to claim 12, wherein:
an outer circumference-side edge of each of the opposite faces of the optical element (45) is formed to be a flat portion extending approximately at a right angle to an optical axis, causing the closed mold parts (15, 16) to be brought into pressure contact with the flat portions to cut off a resin for forming the frame unit (46).
